# EUROPEAN PATENT APPLICATION

(11) **EP 4 503 318 A1**
(43) Date of publication of application: **05.02.2025**
(21) Application number: 22934166.4
(22) Date of filing: 31.03.2022
(51) Int. Cl.: H01M 50/533

(54) **BATTERY AND ELECTRONIC APPARATUS THEREOF**

(71) Applicant: Ningde Amperex Technology Limited, Ningde, Fujian 352100 (CN)
(72) Inventor: TIAN, Jing, Ningde, Fujian 352100 (CN); QIU, Shenzhao, Ningde, Fujian 352100 (CN)
(74) Representative: Icosa
(86) International application number: PCT/CN2022/084350
(87) International publication number: WO 2023/184318

(57) **Abstract**

This application provides a battery and an electronic apparatus including the battery. The battery includes a wound body, and the wound body includes a first electrode plate, a separator, and a second electrode plate that are stacked and wound. The first electrode plate includes a first current collector and a first active material layer provided on the first current collector. The first current collector includes, along a width direction of the first current collector, a first portion provided with a first active material layer and a second portion not provided with the first active material layer. The second portion is located on a side of the first portion perpendicular to a winding direction and forms a plurality of layers of first tab rolls around a central axis of the wound body. At least one layer of the first tab rolls includes a plurality of first tab plates separated from each other. A spacing of adjacent first tab plates in the winding direction is 0 mm to 3 mm. The first tab rolls in the battery of this application include a plurality of first tabs separated from each other, which can improve the liquid injection efficiency and reduce the bending stress of the first tab rolls, thereby increasing the welding reliability. The spacing of 0 to 3 mm not only improves the void fraction between the first tab rolls, but also maintains a higher overcurrent capability.

## Description

### TECHNICAL FIELD

This application relates to the field of energy storage apparatus, in particular to a battery and an electronic apparatus including the battery.

### BACKGROUND

In order to solve the global energy crisis, environmental pollution, climate change, low carbon economy and other serious problems, secondary batteries are developing rapidly, and have become a trend for application especially in the fields of electric vehicles, electric bicycles and other transportation and energy storage. Distinguished from the manufacturing process, secondary batteries are categorized into stacked batteries and jelly-roll batteries. Distinguished from the secondary battery packaging form, secondary batteries are mainly divided into pouch batteries, square batteries and cylindrical batteries.

Regardless of pouch batteries, square batteries and cylindrical batteries, most manufacturers adopt the jelly-roll batteries for manufacturing from the perspective of the process cost and battery performance. The wound body of a jelly-roll battery is generally formed by sequentially stacking and winding a first electrode plate, a separator and a second electrode plate. The first electrode plate includes a first current collector and a first active material layer provided on the first current collector. The second electrode plate includes a second current collector and a second active material layer provided on the second current collector. The first active material layer can be intermittently or continuously applied on the first current collector. The second active material layer can be intermittently or continuously applied on the second current collector. The first current collector and the second current collector are each provided with a continuous region that has a specified width and is not provided with an active material layer at the edge along the winding direction; and the region of the first current collector that is not provided with an active material layer and the region of the second current collector that is not provided with an active material layer are located at two opposite ends of the wound body and form a first electrode plate all-tab and a second electrode plate all-tab, respectively. By setting the all-tabs, the internal resistance of the battery can be reduced, the large multiplication charging and discharging performance of the battery can be improved, the heat generation during charging and discharging can be reduced, and the cycling performance and safety performance can be improved. When manufacturing the battery, the all-tabs at both ends of the wound body are flattened by a flattening device to form a first electrode plate welding position and a second electrode plate welding position, respectively. Two ends of the wound body are then wrapped with an insulation adhesive tape, and the insulation adhesive tape is beyond the wound body for a certain distance in the width direction. After flattening, the first electrode plate welding position and the second electrode plate welding position are welded with a first current collecting piece and a second current collecting piece respectively. After the battery is put into a housing, one of the current collecting pieces is transition-welded to a cover plate, the cover plate is then sealed to the housing through end cap welding, and an electrolyte solution is then injected through an electrolyte solution injection hole in the cover plate.

Currently, the main disadvantages of the battery of the all-tab structure are as follows: (1) due to the extremely dense connection between the flattened tabs, it is difficult for the electrolyte solution to quickly infiltrate the first electrode plate and the second electrode plate, which seriously affects liquid injection efficiency of the battery; and (2) the flattened wound body needs to be wrapped with the insulation adhesive tape, which increases the production process, and at the same time, due to the bumps and vibrations of the wound body in the housing and the actual use process, the tabs that are not in the welding area of the flattening surface are easily folded and deformed to contact with the housing, resulting in an internal short-circuit.

### SUMMARY

Based on the above problems, an objective of this application is to provide a battery and an electronic apparatus including the battery to solve the problem of low liquid injection efficiency of the battery.

To achieve the foregoing objective, a first aspect of this application provides a battery including a wound body. The wound body includes a first electrode plate, a separator, and a second electrode plate that are stacked and wound. The first electrode plate includes a first current collector and a first active material layer provided on the first current collector. The first current collector includes, along a width direction of the first current collector, a first portion provided with a first active material layer and a second portion not provided with the first active material layer. The second portion is located on a side of the first portion perpendicular to a winding direction and forms a plurality of layers of first tab rolls around a central axis of the wound body. At least one layer of the first tab rolls includes a plurality of first tab plates separated from each other. A spacing of adjacent first tab plates in the winding direction is 0 mm to 3 mm.

Compared with the prior art, the first tab rolls in the battery of this application include a plurality of first tab plates separated from each other, i.e., the first tab rolls are divided into a plurality of first tab plates, so that voids between the first tab rolls can be increased, and therefore an electrolyte solution can be rapidly infiltrated into the first electrode plate and the second electrode plate, thereby increasing the liquid injection efficiency and the electrolyte solution infiltration effect, and improving the cycling performance. Further, the setting of the plurality of first tab plates separated from each other facilitates the flattening of the first tab rolls, which reduces the bending stress of the first tab rolls, thereby increasing the welding reliability. The spacing is set at 0 mm to 3 mm, which can weaken the impact of the large spacing on the overcurrent capability of the first tab rolls, so that while the void fraction of the first tab rolls is improved, the higher overcurrent capability of the first tab rolls can also be maintained.

In some embodiments, a first crack or a first seam is provided between the plurality of first tab plates separated from each other.

In some embodiments, an end of the first tab rolls away from the first portion along a width direction is defined as a top end of the first tab rolls, and each first crack or first seam extends obliquely in a direction from the top end to a bottom end of the first tab rolls. It is conducive to increasing the void of the first tab rolls, and reducing the difficulty of flattening and the space occupied by the first tab rolls.

In some embodiments, the first seam has a dimension of 0.5 mm to 3 mm in the winding direction, which is conducive to further improving the electrolyte solution injection efficiency and improving the cycling performance.

In some embodiments, the first portion includes a winding head portion, a winding tail portion, and a winding middle portion between the winding head portion and the winding tail portion. In the winding direction, a dimension of the winding head portion accounts for 1% to 5% of a dimension of the first portion, a dimension of the winding tail portion accounts for 5% to 20% of the dimension of the first portion, and the first tab plates are located on the same side of the winding middle portion and the winding tail portion. It is conductive to maintaining a lower internal resistance and a higher rate performance, and conducive to reducing the electrolyte solution infiltration effect of the inner ring of the first tab rolls, improving the cycling performance, and further reducing the flattening difficulty of the inner ring of the first tab rolls.

In some embodiments, the first portion includes a winding head portion, a winding tail portion, and a winding middle portion between the winding head portion and the winding tail portion. In the winding direction, the dimension of the winding head portion accounts for 1% to 5% of the dimension of the first portion, the dimension of the winding tail portion accounts for 5% to 20% of the dimension of the first portion, and the first tab plates are located on the same side of the winding middle portion and the winding head portion. It is conductive to maintaining a lower internal resistance and a higher rate performance, and conducive to reducing the amount of adhesive tape.

In some embodiments, the first portion includes a winding head portion, a winding tail portion, and a winding middle portion between the winding head portion and the winding tail portion. In the winding direction, the dimension of the winding head portion accounts for 1% to 5% of the dimension of the first portion, the dimension of the winding tail portion accounts for 5% to 20% of the dimension of the first portion, and the first tab plates are located on a side of the winding middle portion. It is conducive to reducing the electrolyte solution infiltration effect of the inner ring of the first tab rolls, improving the cycling performance, and further reducing the flattening difficulty of the inner ring of the first tab rolls, and is conductive to reducing the amount of the adhesive tape.

In some embodiments, the first electrode plate is provided with a first insulation layer along the winding direction, and the first insulation layer is provided on the second portion and connected to the first active material layer. It is conducive to reducing the risk of short circuit, improving the adsorption capacity of the electrolyte solution, and enhancing the electrolyte solution infiltration effect.

In some embodiments, in the width direction, the first insulation layer extends to the first tab plates. It is conductive to increasing the void fraction between the first tab rolls and between the first tab plates, which is conducive to electrolyte solution infiltration and also is conductive to electrolyte solution adsorption conduction.

In some embodiments, the first cracks or the first seams of the first tab rolls on each layer overlap in a radial direction of the wound body. It is conducive to the conduction of the electrolyte solution to improve the infiltration effect.

In some embodiments, the first portion includes a winding head portion, and the dimension of the winding head portion accounts for 1% to 5% of the dimension of the first portion in the winding direction. The dimension of the first tab plate in the width direction gradually increases in the winding direction. It is conducive to maintaining a lower internal resistance and a higher rate performance, and reducing the flattening difficulty of the first tab rolls to improve the electrolyte solution infiltration effect.

In some embodiments, the second electrode plate includes a second current collector and a second active material layer provided on the second current collector. In the width direction, the second current collector includes a third portion provided with the second active material layer and a fourth portion not provided with the second active material layer. The fourth portion is located on a side of the third portion perpendicular to the winding direction and forms a plurality of layers of second tab rolls around a central axis of the wound body. At least one layer of second tab rolls includes a plurality of second tab plates separated from each other. The spacing of adjacent second tab plates in the winding direction is 0 mm to 3 mm.

In some embodiments, a second crack or a first seam is provided between the plurality of second tab plates separated from each other.

In some embodiments, an end of the second tab rolls away from the third portion along the width direction is defined as a top end of the second tab rolls, and each second crack or second seam extends obliquely in a direction from the top end to a bottom end of the second tab rolls.

In some embodiments, the third portion includes a winding head portion, a winding tail portion, and a winding middle portion between the winding head portion and the winding tail portion. In the winding direction, a dimension of the winding head portion accounts for 1% to 5% of a dimension of the third portion, and a dimension of the winding tail portion accounts for 5% to 20% of the dimension of the third portion. The second tab plates are located on the same side of the winding middle portion and the winding tail portion, or the second tab plates are located on the same side of the winding middle portion and the winding head portion, or the second tab plates are located on a side of the winding middle portion.

In some embodiments, the second electrode plate is provided with a second insulation layer along the winding direction, and the second insulation layer is provided on the fourth portion and connected to the second active material layer.

In some embodiments, in the width direction, the second insulation layer extends to the second tab plates.

In some embodiments, the second cracks or the second seams of the second tab rolls on each layer overlap in a radial direction of the wound body.

In some embodiments, the third portion includes a winding head portion, and the dimension of the winding head portion accounts for 1% to 5% of the dimension of the third portion in the winding direction. The dimension of the second tab plate in the width direction gradually increases along the winding direction.

In some embodiments, the second seam has a dimension of 0.5 mm to 3 mm in the winding direction.

In some embodiments, a housing is further included to accommodate the wound body, the second current collector further includes a connecting portion connected to the winding tail portion of the third portion, and the connecting portion is located on the outer ring of the wound body and connected to an inner peripheral wall of the housing.

In some embodiments, the second electrode plate is a positive electrode plate and the housing is made of aluminum or aluminum alloy; or the second electrode plate is a negative electrode plate and the housing is made of steel. It is conducive to alleviating the problem of the housing being corroded by the electrolyte solution.

In some embodiments, a housing and a cover body sealing the housing are further included, the cover body is provided with an electrolyte solution injection hole and connected to a first current collecting piece located within the housing, and the first tab rolls are welded to the first current collecting piece.

A second aspect of this application provides an electronic apparatus, the electronic apparatus including the battery as described above. The electronic apparatus may be a portable device, a power apparatus, or an energy storage device. Here, the portable device may, but is not limited to, be a cell phone, a video camera, and a laptop. The power apparatus may be, but is not limited to, an electric vehicle, an electric bicycle, and a drone. The energy storage device may be, but is not limited to, an energy storage power station.

### BRIEF DESCRIPTION OF DRAWINGS

FIG. 1 is a schematic diagram of an electronic apparatus according to an embodiment of this application.
FIG. 2 is an exploded view of a battery according to a first embodiment of this application.
FIG. 3 is a three-dimensional diagram of a battery according to a second embodiment of this application.
FIG. 4 is an exploded view of the battery according to the second embodiment of this application.
FIG. 5 is a variation diagram of FIG. 4.
FIG. 6 is a three-dimensional diagram of a wound body in a battery of this application.
FIG. 7 is a first variation diagram of FIG. 6.
FIG. 8 is a second variation diagram of FIG. 6.
FIG. 9 is a third variation diagram of FIG. 6.
FIG. 10 is a fourth variation diagram of FIG. 6.
FIG. 11 is a fifth variation diagram of FIG. 6.
FIG. 12 is a cross-sectional view of a portion A-A shown in FIG. 7.
FIG. 13 is a schematic diagram of a first electrode plate in a battery of this application.
FIG. 14 is a first variation diagram of FIG. 13.
FIG. 15 is a second variation diagram of FIG. 13.
FIG. 16 is a third variation diagram of FIG. 13.
FIG. 17 is a fourth variation diagram of FIG. 13.
FIG. 18 is a fifth variation diagram of FIG. 13.
FIG. 19 is a sixth variation diagram of FIG. 13.
FIG. 20 is a seventh variation diagram of FIG. 13.
FIG. 21 is an eighth variation diagram of FIG. 13.
FIG. 22 is a ninth variation diagram of FIG. 13.
FIG. 23 is a tenth variation diagram of FIG. 13.
FIG. 24 is an eleventh variation diagram of FIG. 13.
FIG. 25 is a schematic diagram of a second electrode plate in a battery of this application.
FIG. 26 is a first variation diagram of FIG. 25.
FIG. 27 is a second variation diagram of FIG. 25.
FIG. 28 is a third variation diagram of FIG. 25.
FIG. 29 is a fourth variation diagram of FIG. 25.
FIG. 30 is a fifth variation diagram of FIG. 25.
FIG. 31 is a sixth variation diagram of FIG. 25.
FIG. 32 is a seventh variation diagram of FIG. 25.
FIG. 33 is an eighth variation diagram of FIG. 25.

### Reference signs of components:

100-battery; 10-wound body; 11-first electrode plate; 111-first current collector; 111a-first portion; 111b-second portion; 1111-winding head portion; 1113-winding middle portion; 1115-winding tail portion; 113-first active material layer; 115-first tab roll; 115a/115b/115c/115d/115e-first tab plate; 115'-first tab group; 117-first groove; 119-first depression; 12-separator; 13-second electrode plate; 131-second current collector; 131a-third portion; 131b-fourth portion; 1311-winding head portion; 1313-winding middle portion; 1315-winding tail portion; 1317-connecting portion; 133-second active material layer; 135-second tab roll; 135a/135b/135c-second tab plate; 14-first insulation layer; 15-first seam; 16-first crack; 17-second insulation layer; 18-second seam; 19-second crack; 210-housing; 220-cover body; 230-first current collecting piece; 240-second current collecting piece; 250-first terminal; 260-second terminal; 270-electrolyte solution injection hole; 300-cell phone; C-central axis; T-top end; B-bottom end; W-winding direction; L-top end to bottom end direction; D-inner ring to outer ring direction; H-height direction; and d-spacing

### DETAILED DESCRIPTION OF EMBODIMENTS

In order to better illustrate the purpose, technical solutions and beneficial effects of this application, this application will be further described in the following in combination with specific drawings and embodiments. It is hereby noted that the following embodiments are further explanations of this application and should not be taken as limitations of this application.

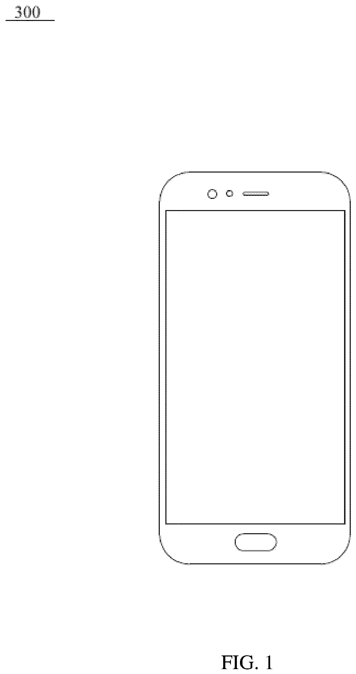

This application mainly solves the problem of low liquid injection efficiency of a battery. This battery can meet the requirements of various electronic apparatus, such as cell phones (as shown in FIG. 1), video cameras, laptops, electric cars, electric bicycles, drones, and energy storage power stations.

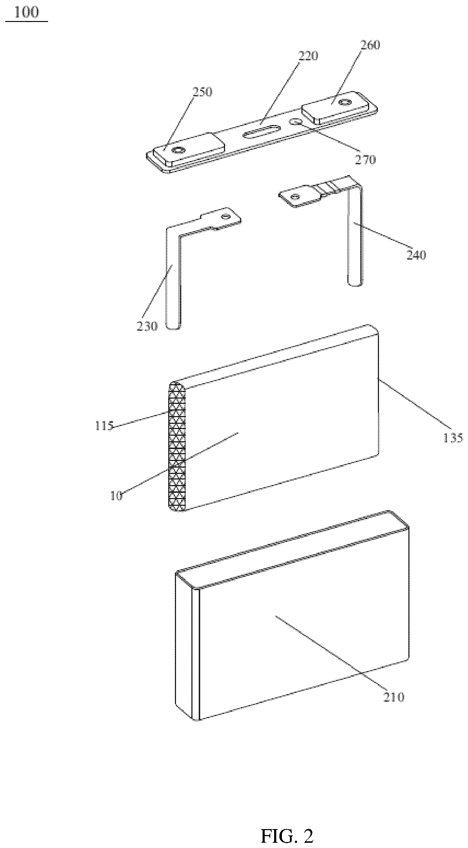

The battery of this application may be applicable to a square battery or a cylindrical battery. The square battery 100 shown in FIG. 2 includes a housing 210, a wound body 10 accommodated in the housing 210, and a cover body 220 sealing the housing 210. The cover body 220 is provided with an electrolyte solution injection hole 270, a first terminal 250, and a second terminal 260. The lower portion of the first terminal 250 is connected to a first current collecting piece 230, and the lower portion of the second terminal 260 is connected to a second current collecting piece 240. The wound body 10 is provided with first tab rolls 115 and second tab rolls 135 at two opposite ends, and the first tab rolls 115 are subjected to laser welding with the first current collecting piece 230 after being flattened, and the second tab rolls 135 are subjected to laser welding with the second current collecting piece 240 after being flattened. The wound body 10 of the square battery 100 is usually flat, and the number of winding layers and the denseness of the winding are lower than those of the cylindrical battery, and therefore it is more difficult to inject liquid into the cylindrical battery 100. Thus, in order to illustrate the technical effect of this application, a cylindrical battery 100 is described in detail as an example.

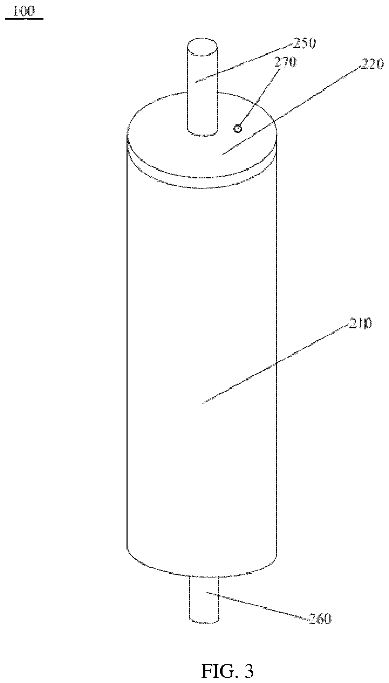

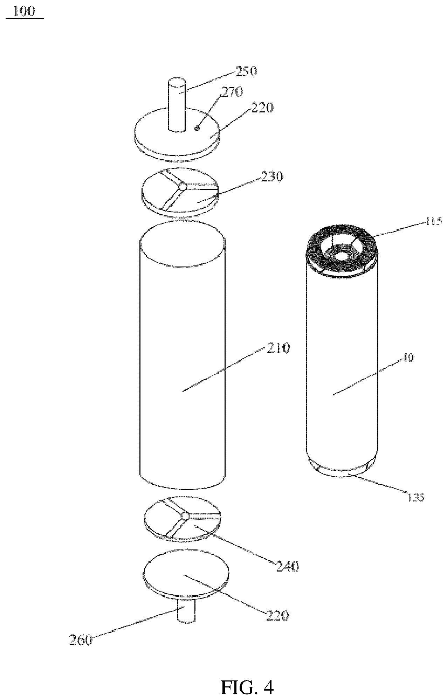

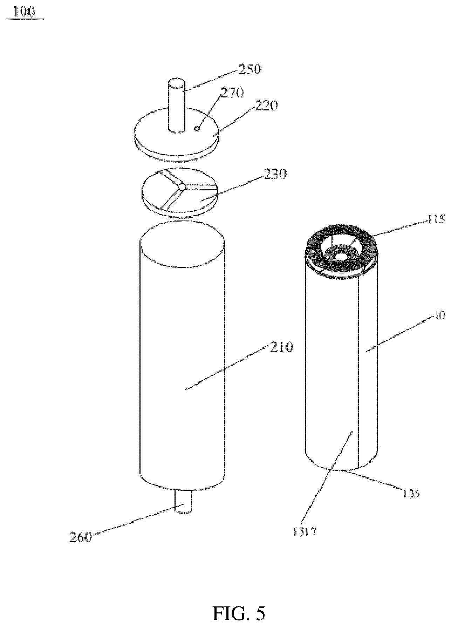

A cylindrical battery 100 shown in FIGS. 3 to 5 includes a housing 210, a wound body 10 accommodated in the housing 210, and a cover body 220 sealing the housing 210. The structure of the cylindrical battery may be illustrated in FIG. 4, and two cover bodies 220 are provided and arranged at two opposite openings of the housing 210. One of the cover bodies 220 is provided with an electrolyte solution injection hole 270 and a first terminal 250, and the first terminal 250 is connected to a first current collecting piece 230. The other cover body 220 is provided with a second terminal 260, and the second terminal 260 is connected to a second current collecting piece 240. The wound body 10 is provided with first tab rolls 115 and second tab rolls 135 at two opposite ends, and the first tab rolls 115 and the second tab rolls 135 can be flattened and then subjected to laser welding with the first current collecting piece 230 and the second current collecting piece 240, respectively. The electrolyte solution can flow directly into the first tab rolls 115 in the vertical direction through the electrolyte solution injection hole 270. In this structure, the first terminal 250 and the second terminal 260 are normally electrically insulated from the housing 210. Alternatively, as shown in FIG. 5, one cover body 220 is provided and seals the housing 210, the cover body 220 is provided with an electrolyte solution injection hole 270 and a first terminal 250, and the first terminal 250 is connected to a first current collecting piece 230. A second terminal 260 is provided at an end of the housing 210 away from the opening. First tab rolls 115 are provided at an end of the wound body 10, the first tab rolls 115 are subjected to laser welding with the first current collecting piece 230, the outer ring of the wound body 10 is provided with a connecting portion 1317, and the connecting portion 1317 is connected to the inner peripheral wall of the housing 210 to electrically connect the second electrode plate 13 to the housing 210. This structure further improves the volumetric energy density of the battery compared to the method in which both ends of the wound body 10 are provided with tab rolls. This application intends to solve the problem of electrolyte solution infiltration through the structure of the wound body 10, and there is no special requirement for the structure of the cover plate 220 and the housing 210, and the connection structure of the wound body 10 therewith, and therefore the description thereof will not be repeated.

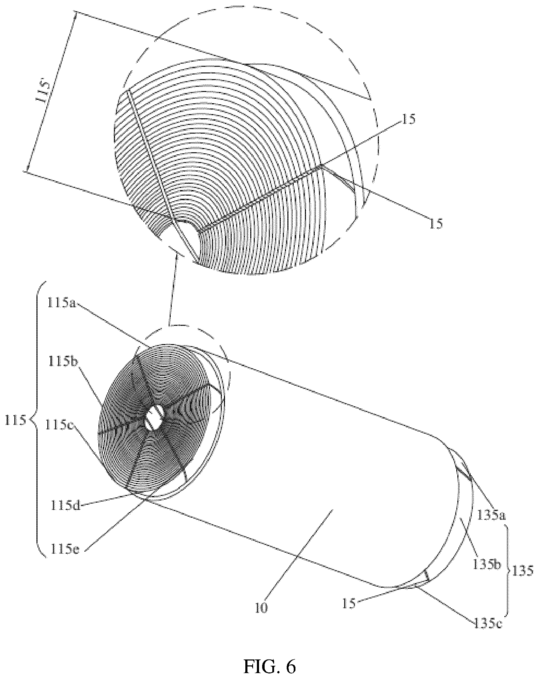

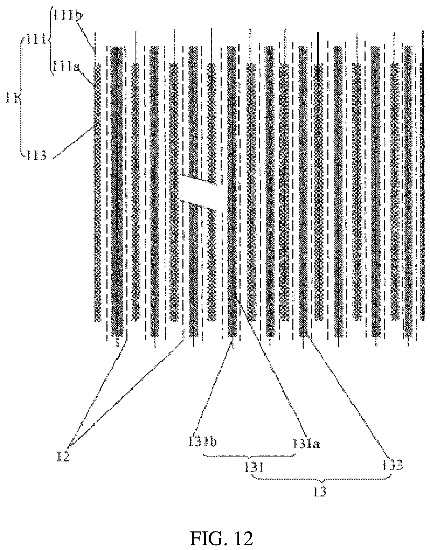

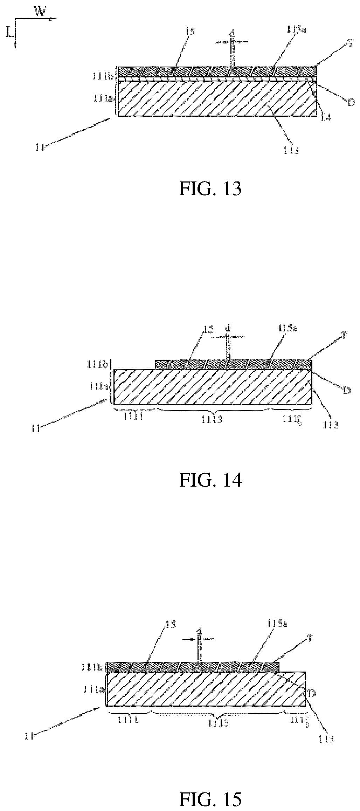

The wound body 10, as shown in FIGS. 6 to 12, includes a first electrode plate 11, a separator 12, and a second electrode plate 13 that are stacked and wound. The first electrode plate 11 includes a first current collector 111 and a first active material layer 113 provided on the first current collector 111. The first current collector 111 includes, along a width direction of the first current collector, a first portion 111a provided with the first active material layer 113 and a second portion 111b not provided with the first active material layer 113. The second electrode plate 13 includes a second current collector 131 and a second active material layer 133 provided on the second current collector 131. In the width direction, the second current collector 131 includes a third portion 131a provided with the second active material layer 133 and a fourth portion 131b not provided with the second active material layer 133. The second portion 111b is located on a side of the first portion 111a perpendicular to the winding direction W (as shown in FIGS. 13 to 24) and forms a plurality of layers of the first tab rolls 115 around the central axis C of the wound body 10. It is understood that the first current collector 111 may also include other portions that are not provided with the first active material layer 113, which may be connected to the first portion 111a in the winding direction. At least one layer of the first tab rolls 115 includes a plurality of first tab plates separated from each other, specifically such as the first tab plate 115a, the first tab plate 115b, the first tab plate 115c, the first tab plate 115d, and the first tab plate 115e. Dividing the first tab rolls 115 into a plurality of first tab plates 115a can increase the void fraction between the first tab rolls 115, and therefore allow the electrolyte solution to rapidly penetrate into the first electrode plate 11 and the second electrode plate 13, so as to improve the liquid injection efficiency. Further, the setting of the plurality of first tab plates 115a separated from each other facilitates flattening of the first tab rolls 115, to reduce the bending stress of the first tab rolls 115, thereby increasing the welding reliability. The spacing d between adjacent first tab plates 115a in the winding direction W is set to 0 mm to 3 mm. Under such parameters, the impact of the large spacing d on the overcurrent capability of the first tab rolls 115 can be weakened, which not only improves the void fraction between the first tab rolls 115, but also maintains a high overcurrent capability of the first tab rolls 115. The measurement of the above mentioned spacing can be performed using a conventional dimensional measuring tool, such as a micrometer. The extension direction of the central axis C of the wound body is also a width direction of the first electrode plate 11 and the second electrode plate 13.

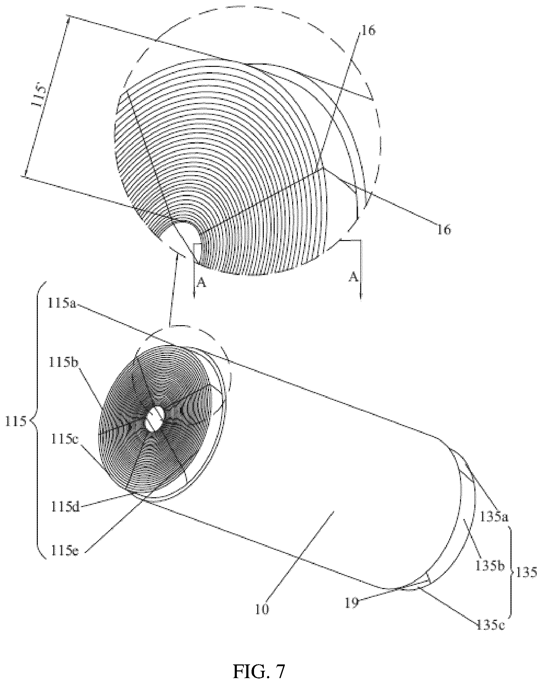

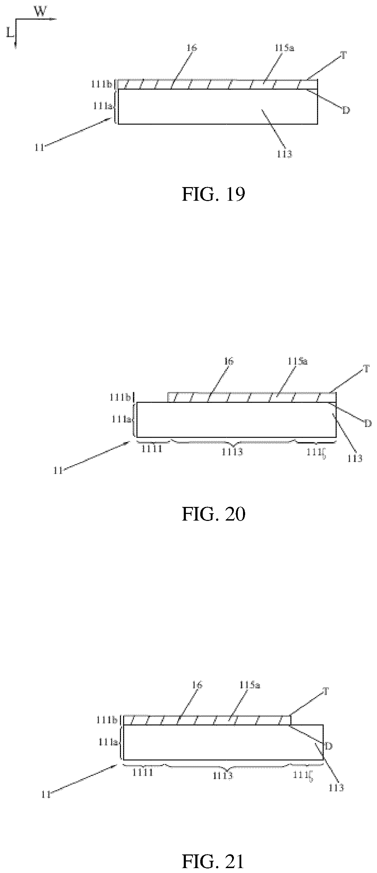

In this application, the first tab rolls 115 may be divided into a plurality of first tab plates 115a in a variety of realization forms, which may be first seams 15 between the plurality of first tab plates 115a separated from each other as shown in FIG. 6, and FIGS. 8 to 11, or first cracks 16 between the plurality of first tab plates 115a separated from each other as shown in FIG. 7, i.e., in this case, the spacing d of the adjacent first tab plates 115a in the winding direction W is 0. In actual production, the former can form the first seam 15 by removing a part of the second portion 111b in a die cutting manner (as in the structure of the first electrode plate 11 shown in FIGS. 13 to 18), and the latter can form the first crack 16 by only disconnecting the second portion 111b without removing in a die cutting manner (as in the structure of the first electrode plate 11 shown in FIGS. 19 to 24). With these two approaches, the spacing d between adjacent first tab plates 115a in the winding direction W is smaller, which allows the first tab rolls 115 to maintain a higher overcurrent capacity and also improves the production efficiency.

Continuing as shown in FIGS. 13 to 24, an end of the first tab rolls 115 away from the first portion 111a is defined as a top end T of the first tab rolls, and each first crack 16 or first seam 15 extends obliquely in a direction L from the top end T to a bottom end B of the first tab rolls 115, and being set to extend obliquely is conducive to increasing the void fraction of the first tab rolls 115, and decreasing the difficulty of flattening and the space occupied by the first tab rolls 115. It is understood that after winding the first electrode plate 11 and/or the second electrode plate 13, in FIG. 13, the dimensions along the W direction become dimensions along the winding direction, and the dimensions along the L direction become dimensions along the direction of the central axis C of the wound body, and also dimensions in the height direction H. The dimensions of the first seams 15 in the winding direction W are 0.5 mm to 3 mm, under which a high void fraction can be maintained between the first tab rolls 115, thereby further improving the liquid injection efficiency and improving the cycling performance of the battery, and maintaining a sufficient overcurrent capacity of the first tab rolls 115.

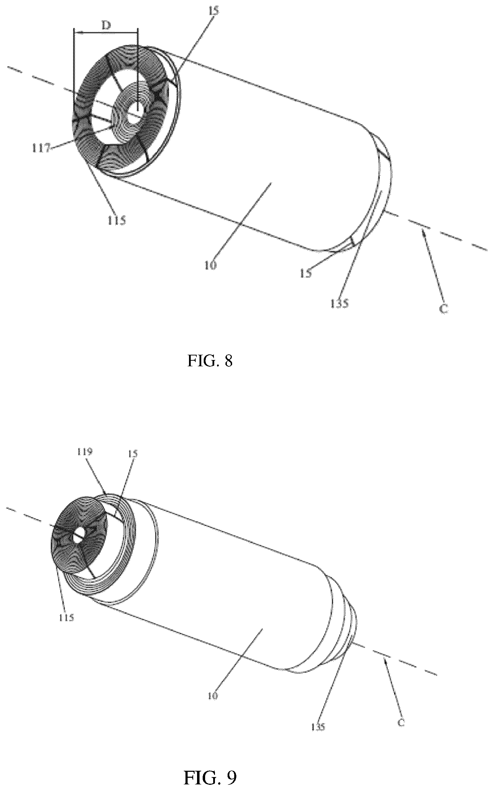

The first tab plate 115a may be realized in various forms. As shown in FIGS. 6 to 10, the first cracks 16 or first seams 15 of the first tab rolls 115 on each layer overlap in the radial direction such that the first tab rolls 115 are divided into a plurality of first tab groups 115' separated from each other. As shown in FIGS. 6 to 8 for five first tab groups 115' and as shown in FIGS. 9 to 10 for three first tab groups 115', by dividing the first tab groups 115', the distance that electrolyte solution flows through the first tab rolls 115 can be shortened, and the flow resistance can be reduced, which is conducive to the conduction of the electrolyte solution, thereby improving the liquid injection efficiency. In a case where the first tab plate 115a is realized as this structure, it is necessary that the dimension of the first tab plate 115a of the first electrode plate 11 in the winding direction W gradually increases, as shown in FIGS. 13 to 16 or as shown in FIGS. 19 to 22, and the magnitude of the increase can be obtained through simulated calculation prior to die cutting.

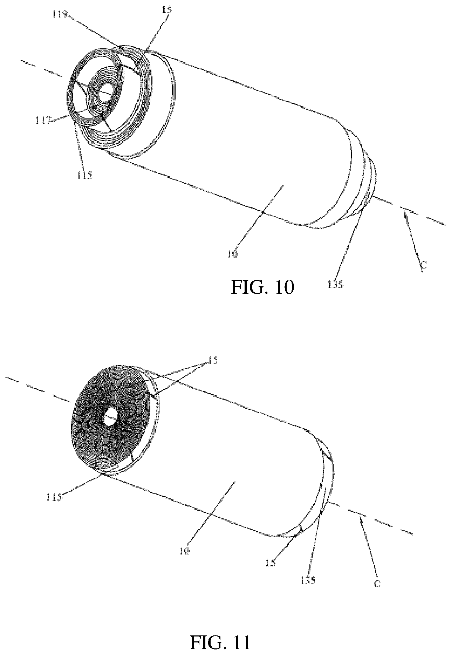

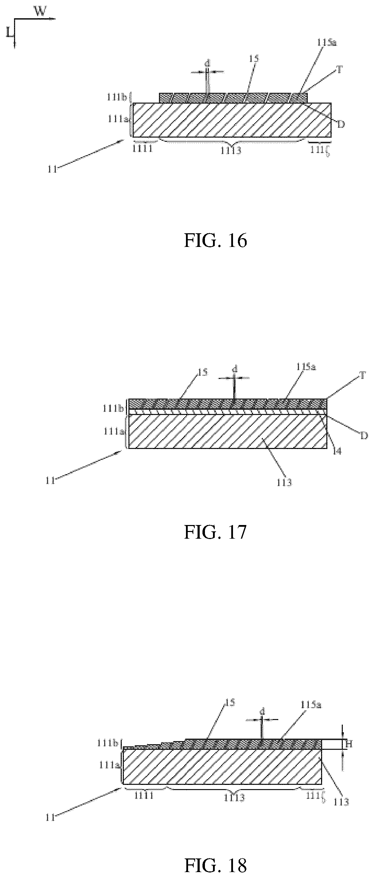

In some embodiments, the first tab plate 115a may also be structured as shown in FIG. 11, with the first crack 16 or the first seam 15 on each layer of the first tab rolls 115 being staggered from the first crack 16 or the first seam 15 on an adjacent layer of the first tab rolls 115. The first electrode plate 11 thereof may be similar to the structure shown in FIGS. 17 to 18 and FIGS. 23 to 24, i.e., the dimensions of the first tab plates 115a along the winding direction W are equal.

In some embodiments, in order to further enhance the electrolyte solution injection space and injection efficiency, the first tab rolls 115 may also be provided in the structure shown in FIG. 8, and the first tab rolls 115 are provided with a first groove 117 on the inner ring of the winding. The first electrode plate 11 of this structure may be as shown in FIGS. 14 and 20. The first portion 111a includes a winding head portion 1111, a winding tail portion 1115, and a winding middle portion 1113 between the winding head portion 1111 and the winding tail portion 1115. In the winding direction W, the dimension of the winding head portion 1111 accounts for 1% to 5% of the dimension of the first portion 111a, and the dimension of the winding tail portion 1115 accounts for 5% to 20% of the dimension of the first portion 111a. The first tab plate 115a is located on the same side of the winding middle portion 1113 and the winding tail portion 1115. This structure is conducive to maintaining a lower internal resistance and a higher rate performance, and also improves the infiltration effect of the electrolyte solution, thereby improving the cycling performance of the battery. At the same time, this structure reduces the dimension of the first tab plates 115a in the winding direction W so as to reduce the weight of the battery and reduce the flattening difficulty of the inner ring of the first tab rolls 115. The first tab plates 115a on the side of the winding head portion 1111 can be removed by laser die cutting.

In some embodiments, the first tab rolls 115 may also be structured as shown in FIG. 9, with the first tab rolls 115 provided with a first depression 119 on the outer ring of the winding. The first electrode plate 11 of this structure may be as shown in FIG. 15 and FIG. 21, with the first tab plate 115a located on the same side of the winding middle portion 1113 and the winding head portion 1111. On the one hand, this structure is conducive to maintaining a lower internal resistance and a higher rate performance, which may enhance the electrolyte solution injection space and reduce the weight of the battery. On the other hand, the risk of an internal short-circuit that is caused by the first tab plate 115a, which is on the side of the winding tail portion 1115 and is not in the welding area, being folded and deformed to contact with the housing 210 can be reduced. At the same time, not having the first tab plate 115a at the winding tail portion 1115 also eliminates the procedure for wrapping insulation adhesive tape. The first tab plate 115a on the side of the winding tail portion 1115 may be removed by laser die cutting.

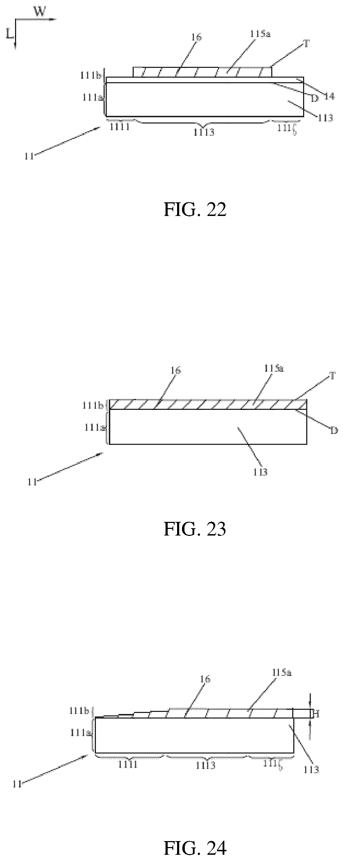

In some embodiments, the first tab rolls 115 may also be structured as shown in FIG. 10, with the first tab rolls 115 provided with a first groove 117 on the inner ring of the winding and a first depression 119 provided on the outer ring of the winding. The first electrode plate 11 of this structure may be provided as shown in FIG. 16 and FIG. 22, with the first tab plate 115a located on the side of the winding middle portion 1113. The first tab plate 115a is located only on the side of the middle portion 1113, so that the electrolyte solution injection space is larger to improve the cycling performance of the battery, the battery weight is lower, and the difficulty in flattening the inner ring of the first tab rolls is also lower, and at the same time, the risk of an internal short-circuit caused by contact between the first tab plate 115a and the housing 210 can also be reduced. The first tab plate 115a on the same side of the winding head portion 1111 and the winding tail portion 1115 may be removed by laser die cutting.

In some embodiments, as shown in FIG. 13, FIG. 17, and FIG. 22, the first electrode plate 11 is provided with a first insulation layer 14 along the winding direction W. The first insulation layer 14 is provided on the second portion 111b and contacts with the first active material layer 113. A direction parallel to the central axis C of the wound body 10 is defined as the height direction H, and the first insulation layer 14 extends in the height direction H to the first tab plate 115a. Therefore, the risk of an internal short-circuit that is caused by contact between the first electrode plate 11 and the second electrode plate 13 when the battery generates heat internally until the separator 12 shrinks can be reduced, and the risk of an internal short-circuit when burrs occur during die-cutting on the first current collector 111, and then the first electrode plate 11 and the second electrode plate 13 make contact during subsequent folding or flattening of the first tab plate 115a can be reduced. In addition, the provision of the first insulation layer 14 is conducive to increasing the void fraction between the first tab rolls 115 and the first tab plates 115a, which also improves the adsorption capacity of the electrolyte solution and enhances the infiltration effect of the electrolyte solution. In particular, for the structure shown in FIG. 22, the first tab plate 115a is located only on the side of the winding middle portion 1113, and the first electrode plate 11 is provided with a first insulation layer 14 along the winding direction W, which not only improves the liquid injection efficiency, but also reduces the risk of short circuit.

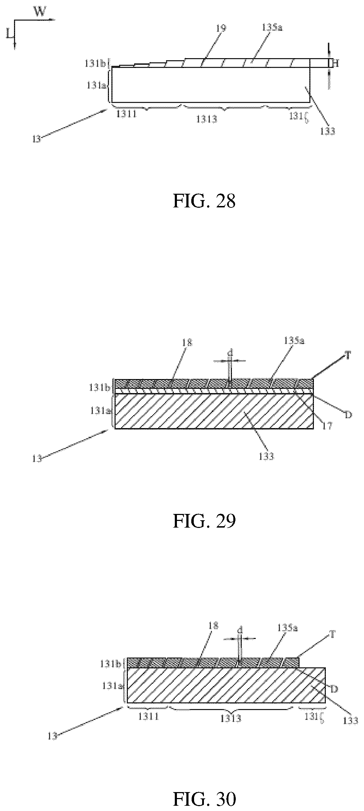

Also, as shown in FIGS. 24 and 30, the height dimension of the first tab plate 115a located on the side of the winding head portion 1111 gradually increases from the winding direction W. Gradually increasing the height dimension of the first tab plate 115a from the winding direction W corresponds to the wound body 10 being recessed inwardly toward the central axis C to form a groove with the depth gradually increasing, which is conducive to maintaining a lower internal resistance and a higher rate performance. This structure also reduces the phenomenon of several times of bending of the first tab plate 115a which is on the inner ring during flattening, and at the same time reduces the bending stress of the first tab rolls 115 to reduce the flattening difficulty of the first tab rolls 115, thereby increasing the reliability of the welding and improving the infiltration of the electrolyte solution.

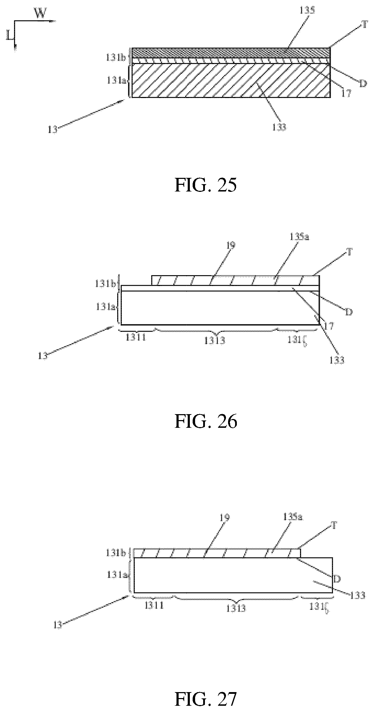

FIGS. 25 to 33 illustrate a variety of different structures of second electrode plates 13. Here, the fourth portion 131b of the second electrode plate 13 in FIG. 25 is located on the side of the third portion 131a perpendicular to the winding direction W and forms a plurality of layers of second tab rolls 135 around the central axis C of the wound body 10. It is understood that the second current collector 131 may also include other portions that are not provided with the second active material layer 133. In some embodiments, in order to improve the void fraction of the second tab rolls 135 of the battery 100 to further improve the liquid injection efficiency, the second electrode plate 13 may be structured as shown in FIGS. 26 to 32, whereby at least one layer of the second tab rolls 135 includes a plurality of second tab plates 135 separated from each other, specifically such as the second tab plate 135a, the second tab plate 135b, and the second tab plate 135c. The spacing d between adjacent second tab plates 135a in the winding direction W is 0 mm to 3 mm, which not only improves the void fraction between the second tab rolls 135, but also maintains a higher overcurrent capacity of the second tab rolls 135. Similar to the first electrode plate 11, the second electrode plate 13 may also be of various forms.

Specifically, as shown in FIGS. 29 to 32, second seams 18 are provided between the plurality of second tab plates 135a separated from each other, or as shown in FIGS. 26 to 28, second cracks 19 are provided between the plurality of second tab plates 135a separated from each other. With both of these approaches, the spacing d between adjacent second tab plates 135a in the winding direction W is smaller, which allows the second tab rolls 135 to maintain a higher overcurrent capability. Similarly, each second crack 19 or second seam 18 extends obliquely in a direction L from a top end T to a bottom end B of the second tab rolls 135, and being set to extend obliquely is conducive to increasing the void fraction of the second tab rolls 135 and flattening the second tab rolls 135 and reducing the space occupied by the second tab rolls 135s. The second seam 18 has a dimension of 0.5 mm to 3 mm in the winding direction W, under which a higher void fraction can be maintained between the second tab rolls 135 to further improve the liquid injection efficiency and improve the cycling performance of the battery, and a sufficient overcurrent capacity of the second tab rolls 135 can be maintained.

In some embodiments, as shown in FIGS. 26 to 27 and FIGS. 29 to 31, the dimension of the second tab plate 135a in the winding direction W gradually increases, and the magnitude of the increase can be obtained through simulated calculation prior to die cutting. By means of this structure, the second cracks 19 or the second seams 18 of the second tab rolls 135 on each layer overlap in the radial direction of the wound body 10. Similarly, the second tab rolls 135 can be divided into a plurality of second tab groups separated from each other (not shown in the figures). The radial direction of the wound body 10 is perpendicular to the direction of the central axis of the wound body 10. This structure can shorten the distance that the electrolyte solution flows through the second tab rolls 135, and reduce the flow resistance, which is conducive to the conduction of the electrolyte solution, thereby improving the liquid injection efficiency.

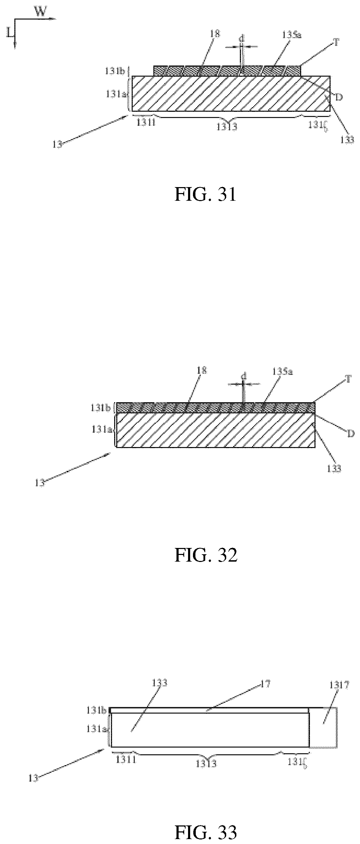

In some embodiments, in order to further enhance the electrolyte solution injection space and injection efficiency, the structure of the second electrode plate 13 may be as shown in FIGS. 26 to 27 or FIGS. 30 to 31, and the third portion 131a includes a winding head portion 1311, a winding tail portion 1315, and a winding middle portion 1313 between the winding head portion 1311 and the winding tail portion 1315. In the winding direction W, the dimension of the winding head portion 1311 accounts for 1% to 5% of the dimension of the third portion 131a, and the dimension of the winding tail portion 1315 accounts for 5% to 20% of the dimension of the third portion 131a. The second tab plate 135a is located on the same side of the winding middle portion 1113 and the winding tail portion 1115 (as shown in FIG. 26). This structure not only enhances the electrolyte solution injection space, but also reduces the dimension of the second tab plate 135a in the winding direction W to reduce the battery weight. Alternatively, as shown in FIGS. 27 and 30, the second tab plate 135a is located on the same side of the winding middle portion 1313 and the winding head portion 1311, which can enhance the electrolyte solution injection space, reduce the weight of the battery, reduce the risk of an internal short-circuit, and eliminate the procedure for wrapping insulation adhesive tape. Alternatively, as shown in FIG. 31, the second tab plate 135a is located on the side of the winding middle portion 1313. The second tab plate 135a being located only on the side of the winding middle portion 1313 allows for a larger electrolyte injection space and lower battery weight, and, at the same time, reduces the risk of an internal short-circuit.

In some embodiments, as shown in FIGS. 25 to 26, FIG. 29, and FIG. 33, the second electrode plate 13 is provided with a second insulation layer 17 along the winding direction W. The second insulation layer 17 is provided on the fourth portion 131b and contacts with the second active material layer 133. Further, as shown in FIGS. 25 to 26 and FIG. 29, the second insulation layer 17 extends in the height direction H to the second tab plate 135a, thereby reducing the risk of a short-circuit inside the battery. Also, as shown in FIG. 28, the height dimension of the second portion tab plate 135a located on the side of the winding head portion 1311 gradually increases from the winding direction W. This structure reduces the phenomenon of several times of bending of the second portion tab plate 135a which is on the inner ring during flattening, and also reduces the bending stress of the second tab rolls 135, thereby increasing the reliability of the welding and increasing the infiltration of the electrolyte solution.

It is further noted that in order to realize the structure as shown in FIG. 5, i.e., electrically connecting the second electrode plate 13 to the housing 210, the second electrode plate 13 may be structured as shown in FIG. 33. The second current collector 131 may include a connecting portion 1317 connected to the winding tail portion 1315 of the third portion 131a, and the connecting portion 1317 is not provided with the second active material layer 133, and may be connected to the third portion 131a in the winding direction W. After winding, the connecting portion 1317 is located on the outer ring of the wound body 10 and is connected to the inner peripheral wall of the housing 210. The first electrode plate 11 of this application may be a positive electrode plate or a negative electrode plate, and the corresponding second electrode plate 13 may be a negative electrode plate or a positive electrode plate. In the structure shown in FIG. 5, the second electrode plate 13 is a positive electrode plate, in order to facilitate alleviating the problems of puncture, overcharging and the like.

In some embodiments, the second electrode plate 13 is a positive electrode plate and the housing 210 is made of aluminum or aluminum alloy; or the second electrode plate 13 is a negative electrode plate and the housing 210 is made of steel. It is conducive to alleviating the problem of the housing 210 being corroded by the electrolyte solution.

In conclusion, it should be noted that the foregoing embodiments are merely intended to describe the technical solutions of this application rather than to limit the protection scope of this application. Although this application is described in detail with reference to preferred embodiments, it is not limited to those listed in the embodiments, and persons of ordinary skill in the art should understand that modifications or equivalent replacements can be made to the technical solutions of this application, without departing from the essence and scope of the technical solutions of this application.

## Claims

1. A battery, comprising a wound body, wherein the wound body comprises a first electrode plate, a separator and a second electrode plate that are stacked and wound, the first electrode plate comprises a first current collector and a first active material layer provided on the first current collector, the first current collector comprises, along a width direction of the first current collector, a first portion provided with the first active material layer and a second portion not provided with the first active material layer, the battery **characterized in that** the second portion is located on a side of the first portion perpendicular to a winding direction and forms a plurality of layers of first tab rolls around a central axis of the wound body, at least one layer of the first tab rolls comprises a plurality of first tab plates separated from each other, and a spacing of the adjacent first tab plates in the winding direction is from 0 mm to 3 mm.

2. The battery according to claim 1, **characterized in that** a first crack or a first seam is provided between the plurality of first tab plates separated from each other.

3. The battery according to claim 2, **characterized in that** an end of the first tab rolls away from the first portion along the width direction is defined as a top end of the first tab rolls, and the first crack or the first seam extends obliquely in a direction from a top end to a bottom end of the first tab rolls.

4. The battery according to claim 2 or 3, **characterized in that** the first seam has a dimension of 0.5 mm to 3 mm in the winding direction.

5. The battery according to claim 1, **characterized in that** the first portion comprises a winding head portion, a winding tail portion and a winding middle portion between the winding head portion and the winding tail portion, in the winding direction, a dimension of the winding head portion accounts for 1% to 5% of a dimension of the first portion, a dimension of the winding tail portion accounts for 5% to 20% of the dimension of the first portion, the first tab plates are located on a same side of the winding middle portion and the winding tail portion, or the first tab plates are located on a same side of the winding middle portion and the winding head portion, or the first tab plates are located on a side of the winding middle portion.

6. The battery according to claim 1, **characterized in that** the first electrode plate is provided with a first insulation layer along the winding direction, and the first insulation layer is provided on the second portion and connected to the first active material layer.

7. The battery according to claim 6, **characterized in that** in the width direction, the first insulation layer extends to the first tab plates.

8. The battery according to claim 2, **characterized in that** the first cracks or the first seams of the first tab rolls on each layer overlap in a radial direction of the wound body.

9. The battery according to claim 1, **characterized in that** the first portion comprises a winding head portion, in the winding direction, a dimension of the winding head portion accounts for 1% to 5% of a dimension of the first portion, and a dimension of the first tab plates in the width direction gradually increases along the winding direction.

10. The battery according to claim 1, **characterized in that** the second electrode plate comprises a second current collector and a second active material layer provided on the second current collector, the second current collector comprises, along the width direction, a third portion provided with the second active material layer and a fourth portion not provided with the second active material layer, the fourth portion is located on a side of the third portion perpendicular to the winding direction and forms a plurality of layers of second tab rolls around a central axis of the wound body, at least one layer of the second tab rolls comprises a plurality of second tab plates separated from each other, and a spacing of the adjacent second tab plates in the winding direction is from 0 mm to 3 mm.

11. The battery according to claim 10, **characterized in that** the battery further comprises a housing that accommodates the wound body, the second current collector further comprises a connecting portion that is connected to a winding tail portion of the third portion, and the connecting portion is located on an outer ring of the wound body and connected to an inner peripheral wall of the housing.

12. The battery according to claim 11, **characterized in that** the second electrode plate is a positive electrode plate and the housing is made of aluminum or aluminum alloy; or the second electrode plate is a negative electrode plate and the housing is made of steel.

13. The battery according to claim 1, **characterized in that** the battery further comprises a housing and a cover body sealing the housing, the cover body is provided with a hole and connected to a first current collecting piece located within the housing, and a first tab is connected to the first current collecting piece.

14. An electronic apparatus, **characterized in that** the electronic apparatus comprises the battery according to any one of claims 1 to 13.
